# EUROPÄISCHE PATENTANMELDUNG

(11) **EP 0 631 893 A1**
(43) Veröffentlichungstag der Anmeldung: **04.01.1995**
(21) Anmeldenummer: 94109440.1
(22) Anmeldetag: 18.06.1994
(51) Int. Cl.: B60J 7/00

(54) **Hebedach oder Schiebehebedach für Fahrzeuge**

(30) Priorität: 01.07.1993 DE 4321915
(71) Anmelder: WEBASTO KAROSSERIESYSTEME GmbH, D-82131 Stockdorf (DE)
(72) Erfinder: Schleicher, Bernd, D-80689 München (DE)
(74) Vertreter: Wiese, Gerhard

(57) **Zusammenfassung**

Hebedach oder Hebeschiebedach für Fahrzeuge mit einem starren Deckel (12), der zum Öffnen und Schließen einer in einer festen Dachhaut (10) vorgesehenen Dachöffnung (11) heb- und senkbar oder heb-, senk- und verschiebbar ist. Zum mindestens teilweisen Abdecken von bei ausgestelltem Deckel zwischen den seitlichen Rändern (27) des Deckels und der Dachhaut gebildeten Randspalten (28) sind an beiden Seiten des Deckels streifenförmige Seitenblenden (30) vom Deckel nach unten abstehend angebracht. Diese Seitenblenden (30) bestehen aus einem komprimierbaren Schaumstoff-Material.

## Beschreibung

Die Erfindung bezieht sich auf ein Hebedach oder Schiebehebedach für Fahrzeuge mit einem starren Deckel, der zum Öffnen und Schließen einer in einer festen Dachhaut vorgesehenen Dachöffnung heb- und senkbar oder heb-, senk- und verschiebbar ist, und mit streifenförmigen Seitenblenden, die zum mindestens teilweisen Abdecken von bei ausgestelltem Deckel zwischen den seitlichen Rändern des Deckels und der Dachhaut gebildeten Randspalten an beiden Seiten des Deckels vom Deckel nach unten abstehend angebracht sind.

Bei einem bekannten Fahrzeugdach dieser Art (DE 37 41 902 A1) sind Kunststoff-Seitenblenden mit einer schwertähnlichen Außenkontur vorgesehen, die durch unterschiedliche Querschnittsabmessungen in ihrem deckelseitigen Bereich starr und an ihrem freien Ende flexibel ausgelegt sind. Auch aus der DE 34 42 616 C2 sind Seitenblenden für Schiebehebedächer bekannt, deren unterer Randbereich flexibel ausgebildet ist und aus einem flachen Gummi- oder Kunststoffstreifen besteht, während der obere Teil der Blenden vorzugsweise starr ausgebildet ist. Insgesamt starte Seitenblenden sind unter anderem aus DE 23 19 063 B2, DE 25 02 775 C3 und DE 37 39 529 C2 bekannt.

Bei Verwendung von starten Seitenblenden sind die Höhe der Blende und damit auch ihre Wirkung (insbesondere was die Ästhetik und Geräuschreduzierung bei ausgestelltem Deckel anbelangt) durch die Bauhöhe des Daches bzw. des Dachrahmens begrenzt. Dies bringt vor allem bei flachbauenden Fahrzeugdächern Probleme mit sich, die durch eine flexible Ausbildung des unteren Blendenendes nur teilweise ausgeräumt werden können.

Der Erfindung liegt die Aufgabe zugrunde, ein Hebedach oder Schiebehebedach für Fahrzeuge zu schaffen, bei dem gewährleistet ist, daß die bei ausgestelltem Deckel entstehenden seitlichen Randspalte zwischen den Deckelseitenrändern und der Dachhaut auch dann wirkungsvoll abgedeckt sind, wenn das Hebedach oder Schiebehebedach besonders flach baut.

Ausgehend von einem Hebedach oder Schiebehebedach der eingangs genannten Art wird diese Aufgabe erfindungsgemäß dadurch gelöst, daß die Seitenblenden aus einem komprimierbaren Schaumstoff-Material bestehen.

Seitenblenden aus komprimierbarem Schaumstoff-Material lassen sich auf kleinem Raum zusammenpressen, wenn der Deckel abgesenkt wird. Die zusammengepresste Seitenblende aus Schaumstoff-Material verändert ihre Breitenabmessung gegenüber der nicht zusammengedrückten Zustand wesentlich weniger, als dies bei einem teils starren, teils flexiblen Seitenblende der Fall ist, deren flexibler Teil beim Absenken des Deckels seitlich umgebogen wird. Dies ist darauf zurückzuführen, daß sich bei einer Seitenblende aus komprimierbarem Schaumstoff-Material der Blendenquerschnitt beim Zusammenpressen verringert, während die bekannten Seitenblenden auch bei teilweise flexibler Ausführung grundsätzlich bei allen Deckelstellungen die gleiche Querschnittsgröße haben.

Entsprechend einer bevorzugten weiteren Ausgestaltung der Erfindung sind die Seitenblenden im wesentlichen bündig mit dem jeweiligen Deckelrand angeordnet. Dies führt zu einer besonders wirkungsvollen Geräuschminderung, ohne daß bei der Schaumstoff-Seitenblende die Gefahr von Lackschäden oder dergleichen am Rand der Dachöffnung besteht, wie letzteres im Falle von mindestens über einen Teil ihrer Höhe starren Blenden der Fall ist.

Die Seitenblenden sind zweckmäßig so bemessen, daß das Schaumstoff-Material zumindest bei ausgestelltem Deckel entspannt ist, und die Seitenblenden mindestens einen größeren Teil der Randspalte zwischen Deckel und Dachhaut abdecken.

Die Befestigung der Seitenblenden kann unter anderem durch Verkleben mit dem Deckel oder einem die Heb- und Senkbewegungen des Deckels mitmachenden Teil erfolgen. An der Blende kann aber auch ein Blendenträger angeformt sein, der seinerseits mit dem Deckel oder einem die Heb- und Senkbewegungen des Deckels mitmachenden Teil angebracht ist, beispielsweise durch Verklipsen.

In weiterer Ausgestaltung der Erfindung kann die Unterseite der Seitenblenden mit einer reibungsmindernden Schicht versehen sein. Dadurch werden Relativbewegungen zwischen der Blende und Teilen der Verstellmechanik des Deckels speziell während des Absenkvorganges des Deckels erleichtert.

Die Poren des Schaumstoff-Materials sind an der dem jeweiligen Seitenrand der Dachöffnung zugewendeten Seite vorzugsweise geschlossen, beispielsweise indem die Seitenblenden an dieser Seite mit einer glatten, geschlossenen Schicht versehen sind. Dadurch wird einer Verschmutzung der Seitenblenden vorgebeugt.

Ein bevorzugtes Ausführungsbeispiel der Erfindung ist nachstehend unter Bezugnahme auf die Zeichnungen näher erläutert. Es zeigen:
- Fig. 1: einen Teilquerschnitt eines Schiebehebedaches bei ausgestelltem Deckel entsprechend der Linie I-I der Fig. 4,
- Fig. 2: einen Teilquerschnitt des Schiebehebedaches bei geschlossenem Deckel entlang der Linie II-II der Fig. 5,
- Fig. 3: einen Teilquerschnitt des Schiebehebedaches bei unter die Dachhaut abgesenktem Deckel entsprechend der Linie III-III der Fig. 5,
- Fig. 4: einen Längsschnitt durch das Schiebehebedach bei ausgestelltem Deckel,
- Fig. 5: einen Längsschnitt durch das Schiebehebedach bei abgesenktem Deckel und
- Fig. 6: einen Teilquerschnitt einer Variante zur Fig. 1.

Das anhand der Zeichnungen erläuterte Schiebehebedach ist spiegelsymmetrisch mit Bezug auf eine Längssymmetrieachse ausgelegt. Der für die eine Dachseite beschriebene Aufbau ist daher auf der anderen Dachseite grundsätzlich der gleiche. Die Begriffe "vorne'' und ''hinten'' beziehen sich auf die normale Fahrtrichtung des Fahrzeuges.

In einer festen Dachhaut 10 ist eine Dachöffnung 11 ausgebildet, die mittels eines starren Deckels 12 wahlweise verschlossen oder mindestens zum Teil freigelegt werden kann. Die Deckelverstellbewegungen erfolgen über eine Verstellmechanik, zu der ein vorderer Schlitten 13 und ein hinterer Schlitten 14 gehören, die entlang einer von einer Gleitschiene 15 gebildeten, dachfesten Längsführung in Fahrzeuglängsrichtung verschiebbar sind. Der vordere Schlitten 13 trägt ein Schwenklager 16 zum scharnierartigen Anlenken des Deckels 12. Das Schwenklager 16 bestimmt eine nahe der Vorderkante des Deckels 12 liegende, quer zur Deckelverschieberichtung verlaufende Deckelschwenkachse. Mit dem Schwenklager 16 ist ein an der Deckelunterseite sitzender Deckelträger 17 schwenkbeweglich verbunden. Der hintere Schlitten 14 ist über ein Schwenklager 18 mit dem einen Ende eines Hebels 19 verbunden, der gegenüber dem Schlitten 14 um eine querverlaufende Schwenkachse verschwenkt werden kann. Das andere Ende des Hebels 19 ist mit dem Deckel 12 schwenkbar und in Deckellängsrichtung um eine begrenzte Strecke verstellbar verbunden. Für diesen Zweck ist an der Deckel, unterseite eine Kulisse 20 angebracht, in der eine in Deckellängsrichtung verlaufende Führungsbahn 21 ausgebildet ist. In die Führungsbahn 21 greift ein am deckelseitigen Ende des Hebels 19 befestigter Bolzen 22 drehbar und entlang der Führungsbahn 21 verschiebbar ein. Ein mit dem Hebel 19 in fester Verbindung stehender Bolzen 23 wirkt mit einer dachfesten Führungsbahn 24 zusammen, um den Hebel 19 in Abhängigkeit von Verschiebebewegungen des hinteren Schlittens 14 zu verschwenken. Mit dem hinteren Schlitten 14 ist ein Antriebskabel 25 verbunden, das seinerseits mit einem Antriebsritzel einer Handkurbel oder eines motorischen Antriebes in Antriebsverbindung steht.

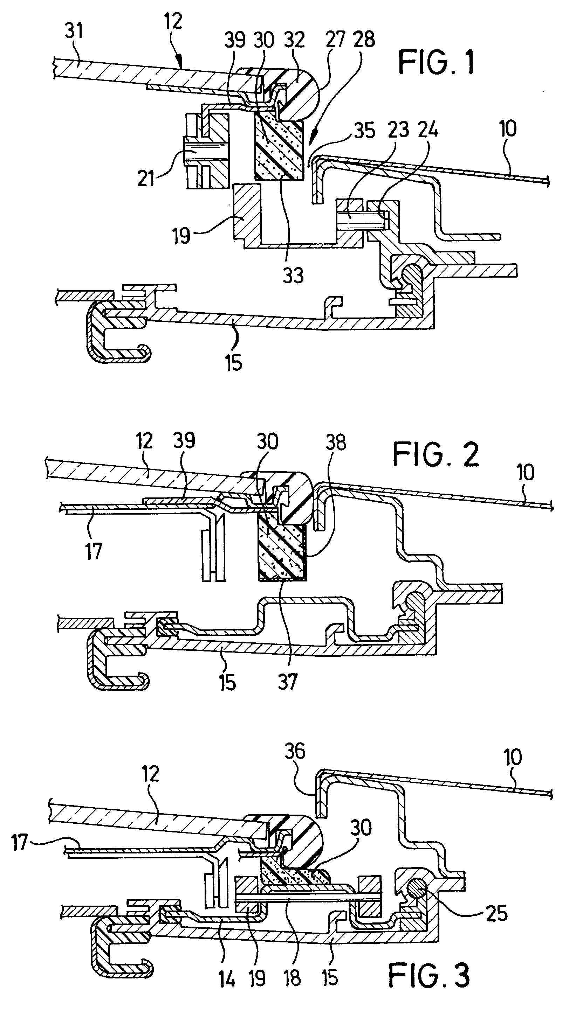

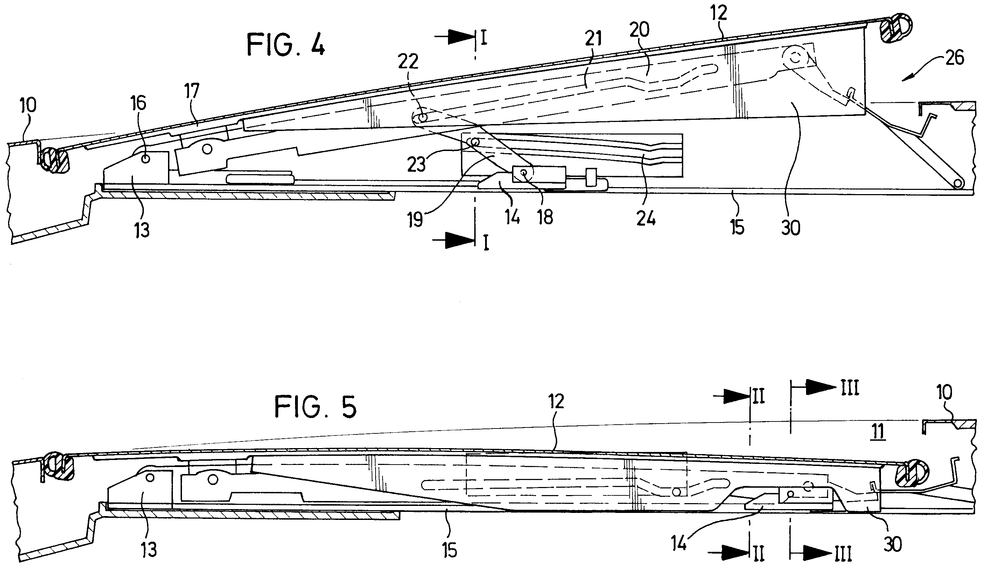

Mittels der Verstellmechanik kann der Deckel 12 mit seiner Hinterkante über die feste Dachhaut 10 ausgestellt werden (Fign. 1 und 4), um im Bereich der Hinterkante der Dachöffnung 11 einen Lüftungsspalt 26 zu bilden. In der Schließstellung (Fig. 2) liegt der Deckel 12 im wesentlichen bündig zu der festen Dachhaut 10. Die Verstellmechanik erlaubt es ferner, den Deckel 12 im Bereich seiner Hinterkante unter die feste Dachhaut 10 abzusenken (Fign. 3 und 5) und den Deckel dann nach hinten unter die Dachhaut 10 zu schieben (nicht dargestellt). Aufbau und Funktionsweise der Verstellmechanik können im übrigen gleich oder ähnlich dem Aufbau und der Funktionsweise der aus der DE-39 30 756A1 bekannten Verstellmechanik sein. Sie bedürfen daher vorliegend keiner weiteren Erläuterung.

Bei ausgestelltem Deckel (Fign. 1 und 4) werden zwischen den seitlichen Rändern 27 des Deckels 12 und der Dachhaut 10 seitliche Randspalte 28 gebildet. Diese Randspalte 28 werden sowohl aus ästethischen als auch aus strömungstechnischen Gründen (Windgeräusche und dergleichen) mit Hilfe von streifenförmigen Seitenblenden 30 abgedeckt. Die Seltenblenden 30 sind an dem Deckel 12 von diesem nach unten abstehend angebracht. Sie liegen, wie in den Fign. 1 und 2 veranschaulicht, vorzugsweise im wesentlichen bündig mit dem jeweiligen Deckelrand 27, der im veranschaulichten Ausführungsbeispiel von einer eine Deckelplatte oder Deckelscheibe 31 umgreifenden Dichtung 32 gebildet ist. Die Seitenblenden 30 sind der Form der Randspalte 28 angepaßt und daher entsprechend Fig. 4 in Längsrichtung im wesentlichen keilförmig gestaltet. Bei der gezeigten Ausführungsform ist die Anordnung so getroffen, daß die Seitenblenden 30 bei voll ausgestelltem Deckel 12 um ein kurzes Stück (z.B. 1 bis 6 mm) in die Dachöffnung 11 eintauchen (Fign. 1 und 4). Der Körper 33 der Seitenblenden 30 besteht aus einem vorzugsweise schallweichen Kunststoff-Material. Als besonders geeignet erwies sich unter anderem ein Polyurethan-Ether-Schaum mit einem spezifischen Gewicht von etwa 30 kg/m³. Alternativ dazu ist auch ein geschlossenzelliger Polyethylen (PE)-Schaum geeignet. Dieses Material ist zumindest bei ausgestelltem Deckel 12 (Fign. 1 und 4) entspannt. Bei abgesenktem Deckel 12 werden die Seitenblenden 30 dagegen zwischen dem Deckel 12 und Teilen zusammengedrückt, welche die Seitenränder der Dachöffnung 11 untergreifen, das heißt insbesondere dem Schlitten 14 und der Gleitschiene 15.

Weil der Schaumstoffkörper 33 der Seitenblenden 30 relativ weich ist, kann der horizontale Spalt 35 zwischen der seitlichen Außenfläche der Seitenblende und dem beispielsweise von einer Abkantung der Dachhaut 10 gebildeten Seitenrand 36 der Dachöffnung 11 Klein (beispielsweise im Bereich von 0 bis 3 mm) gehalten werden, ohne daß Lackschäden an den Seitenrändern der Dachöffnung befürchtet werden müssen oder aufgrund unvermeidbarer Abmessungs- und Einbautolerarzen übermäßige Reibungen zwischen den Seitenblenden und den Seitenrändern 36 der Dachöffnung 11 zu befürchten sind. Die Unterseite der Seitenblenden 30 kann mit einer reibungsmindernden Schicht 37 versehen sein, um Relativbewegungen zwischen den Seitenblenden 30 und der Verstellmechanik (insbesondere während des Absenkens des Deckels) zu erleichtern. Des weiteren kann es zweckmäßig sein, die Poren des Schaumstoffmaterials an der dem jeweiligen Seitenrand 36 der Dachöffnung 11 zugewendeten Seite zu verschließen, beispielsweise indem die Seitenblenden in diesem Bereich mit einer glatten geschlossenen Schicht 38 versehen sind. Diese läßt sich beispielsweise durch ein Verhauten des Polyurethan-Ether-Schaums mit einem wasserlöslichen Lack oder einer PU-Beschichtung auf Dispersionsbasis erreichen. Alternativ dazu ist auch ein oleo- oder hydrophobes Tränken des PU-Ether-Schaumes möglich. Dadurch läßt sich auf einfache Weise verhindern, daß sich im Betrieb des Fahrzeuges Schmutz an den Seitenblenden anlagert. Bei Verwendung eines geschlossenzelligen Polyethylen (PE)-Schaumes kann auf die Schicht 38 verzichtet werden.

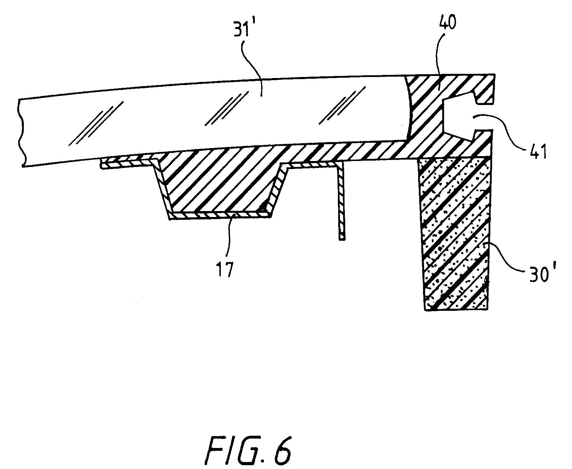

Die Seitenblenden 30 können mit dem Deckel 12 oder einem die Heb- und Senkbewegungen des Deckels mitmachenden Teil, insbesondere dem Deckelträger 17, verklebt sein. Bei der veranschaulichten Ausführungsform ist jedoch an den Seitenblenden 30 jeweils ein Blendenträger 39 angebracht, der seinerseits mit dem Deckelträger 17 verbunden, beispielsweise verklipst, ist. Es versteht sich jedoch, daß auch andere Anbringungen für die Seitenblenden 30 in Betracht kommen. Beispielsweise ist eine Verbindung der Seitenblenden 30 mit den Kulissen 20 möglich. Des weiteren können die Seitenblenden 30 in entsprechende Aufnahmen der Dichtung 32 form- und/oder kraftschlüssig eingesetzt sein, wie dies prinzipiell aus DE 37 41 902 A1 bekannt ist Gegebenenfalls können die Seitenblenden auch an der Dichtung 32 angeformt sein. Eine weitere Alternative besteht darin (Fig. 6), bei einem mit einem Einfaßrahmen 40 aus Polyurethan (PU) umschäumten Glasdeckel 31' die Seitenblende 30' an diesen Einfaßrahmen 40 anzuformen. Dies kann vorzugsweise in einem zweiten Schritt im gleichen Werkzeug nach Schäumen des Einfaßrahmens durch Freigabe eines der Seitenblende 30' entsprechenden Hohlraums in der betreffenden Formhälfte mittels Entfernen einer entsprechenden zum Werkzeug gehörenden Leiste und anschließendem Ausschäumen dieses Hohlraums mit dem flexiblen Material erfolgen. Der Einfaßrahmen 40 weist an seinem Außenumfangsrand eine hinterschnittene Nut 41 zur Aufnahme einer nicht dargestellten Dichtung auf.

Bei der veranschaulichten Ausführungsform sind die Seitenblenden 30 so bemessen, daß die Randspalte 28 vollständig abgedeckt werden. In manchen Anwendungsfällen kann es jedoch genügen, wenn die Randspalte 28 teilweise, insbesondere zu einem größeren Teil, abgedeckt sind. Gegebenenfalls können die Seitenblenden 30 auch etwas um den hinteren Eckradius des Deckels 12 herumgezogen sein. Während in den Zeichnungen ein Schiebehebedach veranschaulicht ist, eignet sich die erläuterte Ausbildung der Seitenblenden ohne weiteres auch für Hebedächer, das heißt Dächer, bei denen der Deckel ausgestellt, aber nicht in Fahrzeuglängsrichtung verschoben werden kann.

## Patentansprüche

1. Hebedach oder Schiebehebedach für Fahrzeuge mit einem starten Deckel (12), der zum Öffnen und Schließen einer in einer festen Dachhaut (10) vorgesehenen Dachöffnung (11) heb- und senkbar oder heb-, senk- und verschiebbar ist, und mit streifenförmigen Seitenblenden (30), die zum mindestens teilweisen Abdecken von bei ausgestelltem Deckel zwischen den seitlichen Rändern(27) des Deckels und der Dachhaut gebildeten Randspalten (28) an beiden Seiten des Deckels vom Deckel nach unten abstehend angebracht sind, **dadurch gekennzeichnet**, daß die Seitenblenden (30) aus einem komprimierbaren Schaumstoff-Material bestehen.

2. Hebedach oder Schiebehebedach nach Anspruch 1, **dadurch gekennzeichnet**, daß die Seitenblenden (30) im wesentlichen bündig mit dem jeweiligen Deckelrand (27) angeordnet sind.

3. Hebedach oder Schiebehebedach nach Anspruch 1 oder 2, **dadurch gekennzeichnet,** daß die Seitenblenden (30) so bemessen sind, daß das Schaumstoff-Material zumindest bei ausgestelltem Deckel (12) entspannt ist, und die Seitenblende) mindestens einen größeren Teil der Randspalte (28) zwischen Deckel und Dachhaut (10) abdecken.

4. Hebedach oder Schiebehebedach nach einem der vorhergehenden Ansprüche, **dadurch gekennzeichnet**, daß die Seitenblenden (30) bei abgesenktem Deckel (12) zwischen dem Deckel und die Seitenränder (36) der Dachöffnung (11) untergreifenden Teilen (Schlitten 14, Gleitschiene 15) zusammendrückbar sind.

5. Hebedach oder Schiebehebedach nach einem der vorhergehenden Ansprüche **dadurch gekennzeichnet**, daß die Seitenblenden (30) derart mit dem Deckel (12) verbunden sind, daß sie bis oder nahezu bis an den jeweiligen Seitenrand (36) der Dachöffnung (11) heranreichen.

6. Hebedach oder Schiebehebedach nach einem der vorhergehenden Ansprüche, **dadurch gekennzeichnet**, daß die Seitenblenden (30) mit dem Deckel (12) oder einem die Heb- und Senkbewegungen des Deckels mitmachenden Teil (Deckelträge 17, Kulisse 20, Dichtung 32, Einfaßrahmen 40) verbunden sind.

7. Hebedach oder Schiebehebedach nach einem der Ansprüche 1 bis 5, **dadurch gekennzeichnet**, daß die Seitenblenden (30) mit einem angeformten Blendenträger (39) versehen sind, der an dem Deckel (12) oder einem die Heb- und Senkbewegungen des Deckels mitmachenden Teil (Deckelträger 17, Kulisse 20) angebracht ist.

8. Hebedach oder Schiebehebedach nach einem der vorhergehenden Ansprüche, **dadurch gekennzeichnet**, daß die Unterseite der Seitenblenden (30) mit einer reibungsmindernden Schicht (37) versehen ist.

9. Hebedach oder Schiebehebedach nach einem der vorhergehenden Ansprüche, **dadurch gekennzeichnet**, daß die Poren des Schaumstoff-Materials zumindenst an der dem jeweiligen Seitenrand (36) der Dachöffnung (11) zugewendeten Seite geschlossen sind.

10. Hebedach oder Schiebehebedach nach Anspruch 9, **dadurch gekennzeichnet**, daß die Seitenblenden (30) an der dem jeweiligen Seitenrand (36) der Dachöffnung (11) zugewendeten Seite mit einer glatten, geschlossenen Schicht (38) versehen sind.

11. Hebedach oder Schiebehebedach nach einem der vorhergehenden Ansprüche, **dadurch gekennzeichnet**, daß als Schaumstoff-Material ein schallweiches Material vorgesehen ist.

12. Hebedach oder Schiebehebedach nach einem der vorhergehenden Ansprüche, **dadurch gekennzeichnet**, daß als Schaumstoff-Material Polyurethan (PU)-Ether-Schaum verwendet wird.

13. Hebedach oder Schiebehebedach nach einem der Ansprüche 1 bis 10, **dadurch gekennzeichnet**, daß als Schaumstoff-Material Polyethylen (PE)-Schaum verwendet wird.
